# NEW EUROPEAN PATENT SPECIFICATION

(11) **EP 2 267 078 B2**
(45) Date of publication and mention of the opposition decision: **03.11.2021**
(45) Mention of the grant of the patent: 24.01.2018
(21) Application number: 10166908.3
(22) Date of filing: 22.06.2010
(51) Int. Cl.: C08L 71/12, B82Y 30/00, C08K 3/04, C08L 53/00, C08L 77/00, C08L 25/04

(54) **Polyphenylene ether thermoplastic resin composition, and molded product using the same**
Thermoplastische Polyphenylenether-Harzzusammensetzung und geformtes Produkt damit
Composition de résine thermoplastique à base d'éther de polyphénylène et produit moulé l'utilisant

(30) Priority: 24.06.2009 KR 20090056509; 24.05.2010 KR 20100048236
(43) Date of publication of application: 29.12.2010
(73) Proprietor: Lotte Chemical Corporation, Seoul 05551 (KR)
(72) Inventor: Shim, In-Sik, Gyeonggi-do (KR); Huh, Jin-Young, Gyeonggi-do (KR); Ha, Doo-Han, Gyeonggi-do (KR)
(74) Representative: Michalski Hüttermann & Partner Patentanwälte mbB

(56) References cited:
- EP-A1- 1 666 532
- WO-A1-01/36536
- WO-A1-94/23433
- WO-A2-2008/054850
- WO-A2-2010/002546
- US-A- 5 334 636
- US-A1- 2003 092 824
- US-A1- 2004 082 729
- US-A1- 2004 114 963
- US-A1- 2006 108 567
- US-A1- 2007 238 832
- US-A1- 2008 128 661
- US-B1- 6 353 050
- US-B1- 6 528 572
- "A Basic Guide to Particle Characterization", Malvern Instruments Worldwide - White Paper, 2012, pages 1-26,
- "FIBRIL Nanotube Technology", Hyperion Catalysis - brochures, August 2002 (2002-08), pages 1-6,

## Description

### Field of the Invention

The present invention relates to a polyphenylene-ether-based thermoplastic resin composition, and a molded product using the same.

### Background of the Invention

Polyphenylene ether resins, or mixtures of a polyphenylene ether resin and a polystyrene resin, are widely used in various fields including automobile parts, electrical parts, and electronic parts due to their excellent mechanical and electrical properties at high temperatures.

US 2007238832 A1 refers to a method of making a thermoplastic composition comprises melt blending a poly(arylene ether), a compatibilizer and a second impact modifier to form a first mixture. The second impact modifier comprises aryl alkylene units. The first mixture is melt blended with polyamide, electrically conductive carbon black, a first impact modifier and fibrous filler.

US 2006108567 A1 refers to a polymeric composite comprises a polymeric resin; an electrically conductive filler; and a polycyclic aromatic compound, in an amount effect to increase the electrical conductivity of the polymeric composition relative to the same composition without the polycyclic aromatic compound. The addition of the polycyclic aromatic compound in addition to a conductive filler imparts improved electrical and mechanical properties to the compositions.

However, polyphenylene ether resins can have poor chemical resistance and workability.

Polyamide resins can have good chemical resistance and workability, but poor heat resistance and impact resistance. Therefore, polyamide resins can have limited application as engineering plastic resins.

A combination of the two resins can exhibit chemical resistance, workability, and heat resistance.

In order to provide such a resin with conductivity, a conductive additive such as carbon black, a carbon fiber, a metal powder, a metal coating inorganic powder, or a metal fiber may be used. However, when the conductive additive is added at less than 10 wt% of a resin, sufficient electrical conductivity may not be ensured, while when a large amount of the conductive additive is added, basic mechanical properties of an electrical conductivity thermoplastic resin such as impact resistance and the like may be remarkably decreased.

There have been attempts to impart electrical conductivity to a thermoplastic resin by adding a small amount of carbon nanotubes as a conductive additive. However, when using the carbon nanotubes singularly, it is hard to obtain conductivity due to poor dispersion, and when using carbon nanotubes and an inorganic filler together, impact strength and conductivity may be decreased.

### Summary of the Invention

One aspect of the present invention provides a polyphenylene-ether-based thermoplastic resin composition that can have an excellent balance of properties such as impact strength, hardness, conductivity, and creep resistance.

Another aspect of the present invention provides a molded product made using the polyphenylene-ether-based thermoplastic resin composition.

According to one aspect of the present invention, a polyphenylene-ether-based thermoplastic resin composition is provided that includes: (A) 100 parts by weight of a mixed resin including (A-1) 5 to 95 wt% of a polyphenylene-ether- based resin and (A-2) 5 to 95 wt% of a polyamide resin; (B) 1 to 30 parts by weight of a styrene-based copolymer resin based on 100 parts by weight of the mixed resin; (C) 0.1 to 10 parts by weight of a conductive additive based on 100 parts by weight of the mixed resin and the conductive additives comprises carbon nanotubes, carbon black, carbon fiber, metal powder, or a combination thereof; and (D) 30 to 50 parts by weight of mica based on 100 parts by weight of the mixed resin.

The polyphenylene-ether-based resin can include a polyphenylene ether resin, a mixture of a polyphenylene ether resin and a vinyl aromatic polymer, or a modified polyphenylene ether resin wherein a reactive monomer is grafted onto a polyphenylene ether resin. Exemplary polyphenylene ether resins include without limitation poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4-phenylene)ether and poly(2,3,6-trimethyl-1,4-phenylene)ether, a copolymer of poly(2,6-dimethyl-1,4-phenylene)ether and poly(2,3,6-triethyl-1,4-phenylene)ether, and the like, and combinations thereof.

Exemplary polyamide resins include without limitation polycaprolactam (nylon 6), poly(11-aminoundecanoic acid) (nylon 11), polylauryllactam (nylon 12), polyhexamethylene adipamide (nylon 66), polyhexamethylene azelamide (nylon 69), polyhexamethylene sebacamide (nylon 610), polyhexamethylene dodecanodiamide (nylon 612), polyhexamethylene terephthalamide (nylon 6T), polytetramethylene adipamide (nylon 46), a polycaprolactam /polyhexamethylene terephthalamide copolymer (nylon 6/6T), a polyhexamethylene adipamide/polyhexamethylene terephthalamide copolymer (nylon 66/6T), a polyhexamethylene adipamide/polyhexamethylene isophthalamide copolymer (nylon 66/6I), a polyhexamethylene terephthalamide/polyhexamethylene isophthalamide copolymer (nylon 6T/6I), a polyhexamethylene terephthalamide/polydodecaneamide copolymer (nylon 6T/12), a polyhexamethylene adipamide/polyhexamethylene terephthalamide/polyhexamethylene isophthalamide copolymer (nylon 66/6T/6I), a polyxylene adipamide (nylon MXD6), polyhexamethylene terephthalamide/poly2-methylpentamethylene terephthalamide copolymer (nylon 6T/M5T), nylon 10T/1012, polynonamethylene terephthalamide (nylon 9T), polydecamethylene terephthalamide (nylon 10T), polyamide 11T (nylon 11T), polyamide 12T (nylon 12T), copolymers thereof, and the like, and combinations thereof.

Exemplary styrene-based copolymer resins may include without limitation AB-type diblock copolymers, ABA-type triblock copolymers, radical block copolymers, and the like, and combinations thereof. The styrene-based copolymer resin may also include a copolymer of a vinyl aromatic monomer and a diene-rubber, such as but not limited to polybutadiene, poly(styrenebutadiene), poly(acrylonitrile-butadiene), and the like, and combinations thereof, as well as partially or substantially completely saturated diene rubbers in which hydrogen is added to the diene rubber.

The conductive additive is included in an amount of 0.1 to 10 parts by weight based on 100 parts by weight of the mixed resin and the conductive additives comprises carbon nanotubes, carbon black, carbon fiber, metal powder, or a combination thereof. In one embodiment, the conductive additive may include a mixture of carbon nanotubes and carbon black. The carbon nanotubes may be included in an amount of 0.1 to 3 wt% based on the total weight of the mixture of carbon nanotubes and carbon black.

The carbon nanotubes can have a diameter of 0.5nm to 100nm, preferably 1 nm to 90nm, also preferred 5nm to 80nm, further preferred 10nm to 70nm and additional preferred 20nm to 60nm; and a length of 0.01 to 100µm, preferably 0.05µm to 90µm, also preferred 0.1µm to 80µm, further preferred 0.5µm to 70µm and additional preferred 1µm to 50µm and the carbon black can have an average particle diameter of 20µm to 70µm, preferably 25µm to 65µm, also preferred 30µm to 60µm, further preferred 35µm to 55µm.

The mica can include without limitationmuscovite, sericite, phlogopite, and the like, and combinations thereof, and may have a particle diameter of 1µm to 100µm, preferably 5µm to 90µm, also preferred 10µm to 80µm, further preferred 20µm to 70µm and additional preferred 30µm to 60µm.

Another aspect of the present invention provides a molded product made using the polyphenylene-ether-based thermoplastic resin composition.

Hereinafter, further embodiments will be described in detail.

The polyphenylene-ether-based thermoplastic resin composition according to one embodiment can have excellent properties such as impact strength, hardness, conductivity, creep resistance, and the like, and therefore can be used as material in the manufacture of parts including without limitation automobile parts such as fuel doors for a car, fenders for a car, and the like.

### Detailed Description of the Invention

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

As used herein, when a specific definition is not otherwise provided, the term "(meth)acrylic acid" refers to "acrylic acid" and "methacrylic acid", and the term "(meth)acrylic acid ester" refers to "acrylic acid ester" and "methacrylic acid ester".

The polyphenylene-ether-based thermoplastic resin composition according to one embodiment includes (A) 100 parts by weight of a mixed resin including (A-1) 5 to 95 wt% of a polyphenylene-ether-based resin and (A-2) 5 to 95 wt% of a polyamide resin; and (B) 1 to 30 parts by weight of a styrene-based copolymer resin based on 100 parts by weight of the mixed resin; and (C) 0.1 to 10 parts by weight of a conductive additive based on 100 parts by weight of the mixed resin, the conductive additive comprises carbon nanotubes, carbon black, carbon fiber, metal powder, or a combination thereof; and (D) 30 to 50 parts by weight of mica based on 100 parts by weight of the mixed resin.

Exemplary components included in the polyphenylene-ether-based thermoplastic resin composition according to embodiments will hereinafter be described in detail.

### (A) Mixed resin

### (A-1) Polyphenylene-ether-based resin

The polyphenylene-ether-based resin according to one embodiment includes a polyphenylene ether resin, a mixture of a polyphenylene ether resin and a vinyl aromatic polymer, or a modified polyphenylene ether resin including a reactive monomer grafted onto a polyphenylene ether resin.

Exemplary polyphenylene ether resins include without limitation poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4-phenylene)ether and poly(2,3,6-trimethyl-1,4-phenylene)ether, a copolymer of poly(2,6-dimethyl-1,4-phenylene)ether and poly(2,3,6-triethyl-1,4-phenylene)ether, and the like, and combinations thereof. In one embodiment, poly(2,6-dimethyl-1,4-phenylene)ether or a copolymer of poly(2,6-dimethyl-1,4-phenylene)ether and poly(2,3,6-trimethyl-1,4-phenylene)ether can be used, and in another embodiment, poly(2,6-dimethyl-1,4-phenylene)ether can be used.

Exemplary vinyl aromatic polymers include without limitation polymerization products of vinyl aromatic monomers such as but not limited to styrene, α-methyl styrene, ρ-methyl styrene, 4-N-propyl styrene, and the like, and combinations thereof. In one embodiment, the vinyl aromatic polymer can include styrene and α-methyl styrene.

The polyphenylene-ether-based resin (A-1) can include polyphenylene ether resin and vinyl aromatic polymer in an amount of 60 to 99 wt% and 1 to 40 wt%, respectively. In some embodiments, the polyphenylene-ether-based resin (A-1) may include polyphenylene ether resin in an amount of 60, 61, 62, 63, 64 ,65, 66, 67, 68, 69, 70, 71, 72, 73, 74, 75, 76, 77, 78, 79 ,80, 81, 82, 83, 84, 85, 86, 87, 88, 89, 90, 91, 92, 93, 94, 95, 96, 97, 98, or 99 wt%. In some embodiments, the polyphenylene-ether-based resin (A-1) may include vinyl aromatic polymer in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 wt%. Further, according to some embodiments of the present invention, the amount of polyphenylene ether resin and/or vinyl aromatic polymer can be in a range from any of the foregoing amounts to any other of the foregoing amounts. The reactive monomer can be grafted onto the polyphenylene ether resin to produce a modified polyphenylene ether resin. The reactive monomer can include without limitation an unsaturated carboxylic acid group or an anhydride group thereof. Examples of the reactive monomer may include without limitation citric anhydride, maleic anhydride, maleic acid, itaconic anhydride, fumaric acid, (meth)acrylic acid, (meth)acrylic acid ester, and the like, and combinations thereof. In one embodiment, the reactive monomer can be citric anhydride. The citric anhydride may form a modified polyphenylene ether resin without an initiator.

The method of manufacturing the modified polyphenylene ether resin is not particularly limited. When using a high processing temperature, the method of manufacturing the modified polyphenylene ether resin can include grafting under melt-kneading using a phosphite-based heat stabilizer.

The reactive monomer may be included in an amount of 0.1 to 10 wt% based on the total amount of the polyphenylene-ether-based resin. In some embodiments, the reactive monomer may be included in an amount of 0.1, 0.2, 0.3, 0.4, 0.5, 0.6, 0.7, 0.8, 0.9, 1, 2, 3, 4, 5, 6, 7, 8, 9, or 10 wt% based on the total amount of the polyphenylene-ether-based resin. Further, according to some embodiments of the present invention, the amount of reactive monomer can be in a range from any of the foregoing amounts to any other of the foregoing amounts. When the reactive monomer is included in an amount within these ranges, the polyphenylene-ether-based thermoplastic resin composition may have improved compatibility and excellent impact resistance.

There is no particular limitation on the degree of polymerization of the polyphenylene-ether-based resin. In exemplary embodiments, taking into accountthermal stability and workability of a resin composition, the polyphenylene-ether-based resin may have an intrinsic viscosity measured in a chloroform solvent at 25°C of 0.2 to 0.8dl/g.

The mixed resin (A) may include the polyphenylene-ether-based resin (A-1) in an amount of 5 to 95 wt%, for example 30 to 70 wt%, based on the total amount of a mixed resin including a polyphenylene-ether-based resin and a polyamide resin. In some embodiments, the polyphenylene-ether-based resin may be included in an amount of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 ,80, 81, 82, 83, 84, 85, 86, 87, 88, 89, 90, 91, 92, 93, 94, or 95 wt%, based on based on the total amount of a mixed resin including a polyphenylene-ether-based resin and a polyamide resin. Further, according to some embodiments of the present invention, the amount of polyphenylene-ether-based resin can be in a range from any of the foregoing amounts to any other of the foregoing amounts. When the polyphenylene-ether-based resin is included in an amount within these ranges, the polyphenylene-ether-based thermoplastic resin composition may have excellent impact resistance by allowing characteristics of a polyphenylene ether resin to be suitably implemented.

### (A-2) Polyamide resin

According to one embodiment, the polyamide resin includes an amide-group in the polymer main chain, and an amino acid, lactam or diamine, and dicarboxylic acid as main components that are polymerized to provide a polyamide.

Examples of the amino acid include without limitation 6-aminocaproic acid, 11-aminoundecanoic acid, 12-aminododecanoic acid, paraaminomethylbenzoic acid, and the like, and combinations thereof. Examples of the lactam include without limitation ε-caprolactam, ω-laurolactam, and the like, and combinations thereof and examples of the diamine include without limitation aliphatic, alicyclic, or aromatic diamines of tetramethylenediamine, hexamethylenediamine, 2-methylpentamethylenediamine, nonamethylenediamine, undecamethylenediamine, dodecamethylenediamine, 2,2,4-trimethylhexamethylenediamine, 2,4,4-trimethylhexamethylenediamine, 5-methylnonamethylenediamine, metaxylenediamine, paraxylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine, and the like, and combinations thereof. Examples of the dicarboxylic acid include without limitation aliphatic, alicyclic, or aromatic dicarboxylic acids such as but not limited to adipic acid, suberic acid, azelaic acid, sebacic acid, dodecane2 acid, terephthalic acid, isophthalic acid, 2-chloroterephthalic acid, 2-methylterephthalic acid, 5-methylisophthalic acid, 5-sodium sulfoisophthalate, 2,6-naphthalenedicarboxylic acid, hexahydroterephthalic acid, hexahydroisophthalic acid, and the like, and combinations thereof. A polyamide homopolymer or copolymer derived from a raw material may be used singularly or as a mixture.

Exemplary polyamide resins include without limitation polycaprolactam (nylon 6), poly(11-aminoundecanoic acid) (nylon 11), polylauryllactam (nylon 12), polyhexamethylene adipamide (nylon 66), polyhexamethylene azelamide (nylon 69), polyhexamethylene sebacamide (nylon 610), polyhexamethylene dodecanodiamide (nylon 612), polyhexamethylene terephthalamide (nylon 6T), polytetramethylene adipamide (nylon 46), a polycaprolactam /polyhexamethylene terephthalamide copolymer (nylon 6/6T), a polyhexamethylene adipamide/polyhexamethylene terephthalamide copolymer (nylon 66/6T), a polyhexamethylene adipamide/polyhexamethylene isophthalamide copolymer (nylon 66/6I), a polyhexamethylene terephthalamide/polyhexamethylene isophthalamide copolymer (nylon 6T/6I), a polyhexamethylene terephthalamide/polydodecaneamide copolymer (nylon 6T/12), a polyhexamethylene adipamide/polyhexamethylene terephthalamide/polyhexamethylene isophthalamide copolymer (nylon 66/6T/6I), polyxylene adipamide (nylon MXD6), a polyhexamethylene terephthalamide/poly2-methylpentamethylene terephthalamide copolymer (nylon 6T/M5T), nylon 10T/1012, polynonamethylene terephthalamide (nylon 9T), polydecamethylene terephthalamide (nylon 10T), polyamide 11T (nylon 11T), polyamide 12T (nylon 12T), copolymer thereofs, and the like, and combinations thereof. The copolymers thereof include without limitation nylon 6/610, nylon 6/66, nylon 6/12, and the like, and combinations thereof.

The polyamide resin can have a melting point of 250°C or more, and a relative viscosity (measured at 25°C after adding 1 wt% of a polyamide resin in m-cresol) of 2 or more. When the melting point and relative viscosity are within the above ranges, mechanical properties and heat resistance of a polyphenylene-ether-based thermoplastic resin composition may be improved.

The mixed resin (A) may include the polyamide resin (A-2) in an amount of 5 to 95 wt%, for example 30 to 70 wt%, based on the total amount of a mixed resin including a polyphenylene-ether-based resin and a polyamide resin. In some embodiments, the polyamide resin may be included in an amount of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64 ,65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95 wt%, based on based on the total amount of a mixed resin including a polyphenylene-ether-based resin and a polyamide resin. Further, according to some embodiments of the present invention, the amount of polyamide polymer can be in a range from any of the foregoing amounts to any other of the foregoing amounts. When the polyamide resin is included in an amount within these ranges, excellent compatibility with a polyphenylene-ether-based resin may be obtained.

### (B) Styrene-based copolymer resin

The styrene-based copolymer resin according to one embodiment that is derived from a vinyl aromatic monomer may be an AB-type diblock copolymer, an ABA-type triblock copolymer, a radical block copolymer, or a combination thereof.

The block copolymer may be a copolymer of a vinyl aromatic monomer, and a diene-rubber, such as but not limited to polybutadiene, poly(styrenebutadiene), poly(acrylonitrile-butadiene), and the like, and combinations thereof. The diene-rubber can be a non-hydrogenated diene-rubber, a partially hydrogenated diene-rubber, or a substantially completely hydrogenated diene-rubber, i.e., unsaturated or partially or substantially completely saturated diene rubbers in which hydrogen is added to the diene.

Exemplary vinyl aromatic monomers may include without limitation styrene, ρ-methyl styrene, α-methyl styrene, 4-N-propyl styrene, and the like, and combination thereof. In one embodiment, styrene, α-methyl styrene, and the like, and combinations thereof can be used. These monomers may be used singularly or in combination with one another.

Exemplary AB-type diblock copolymers include without limitation polystyrene-polybutadiene copolymers, polystyrene-polyisoprene copolymers, polyalphamethylstyrene-polybutadiene copolymers, copolymers in which hydrogen is added to the copolymer, and the like and combinations thereof. AB-type diblock copolymers are commercially well known in this field. Examples of commercially available AB-type diblock copolymers include without limitation Solprene and K-resin manufactured by Phillips, and Kraton D and Kraton G manufactured by Shell Co., Ltd.

Exemplary ABA-type triblock copolymers include without limitation polystyrene-polybutadiene-polystyrene (SBS) copolymers, polystyrene-polyisoprene-polystyrene (SIS) copolymers, polyalphamethylstyrene-polybutadiene-polyalphamethylstyrene copolymers, polyalphamethylstyrene-polyisoprene-polyalphamethylstyrene copolymers, copolymers in which hydrogen is added to the copolymer, and the like, and combinations thereof. ABA-type triblock copolymers are well known in the commercial field. Examples of commercially available ABA-type triblock copolymers include without limitation Cariflex, Kraton D, and Kraton G manufactured by Shell Co., Ltd., Septon manufactured by Kuraray Co., Ltd., and the like.

The radical block copolymer may be obtained through synthesis of styrene block copolymers by living radical polymerization method.

The styrene-based copolymer resin may be included in an amount of 1 to 30 parts by weight, for example 1 to 10 parts by weight, based on 100 parts by weight of a mixed resin of a polyphenylene-ether-based resin and a polyamide resin. In some embodiments, the styrene-based copolymer resin may be included in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 parts by weight based on 100 parts by weight of a mixed resin of a polyphenylene-ether-based resin and a polyamide resin. Further, according to some embodiments of the present invention, the amount of styrene-based copolymer resin can be in a range from any of the foregoing amounts to any other of the foregoing amounts. When the styrene-based copolymer resin is included in an amount within these ranges, impact resistance can be significantly increased without decreasing the excellent compatibility of a polyphenylene-ether-based resin and a polyamide resin.

### (C) Conductive additive

The conductive additive according to one embodiment comprises carbon nanotubes, carbon black, carbon fiber, metal powder and combinations thereof. In exemplary embodiments, a mixture of carbon nanotubes and carbon black may be used.

The carbon nanotubes have excellent mechanical strength, mechanical characteristics such as high Young's modulus, and aspect ratio, electrical conductivity, and thermal stability. When the carbon nanotubes are used to make a polymer composite, a carbon nanotube-polymer composite having improved mechanical, thermal, and electrical properties may be provided.

Methods of synthesizing the carbon nanotubes include without limitation arc-discharge, pyrolysis, plasma chemical vapor deposition (PECVD), thermal chemical vapor deposition (CVD), electrolysis, and the like. Carbon nanotubes produced using any suitable method may be used in the present invention.

Carbon nanotubes may be classified as single-walled carbon nanotubes, double-walled carbon nanotubes, and multi-walled carbon nanotubes, depending on the number of walls. In one embodiment, multi-walled carbon nanotubes can be used but the present invention is not limited to the use of multi-walled carbon nanotubes.

There is no particular limit on the size of the carbon nanotubes used in the present invention. Exemplary carbon nanotubes useful in the invention can have a diameter and length of 0.5 to 100nm and 0.01 to 100µm, respectively, and in one embodiment, may have a diameter and length of 1 to 10nm and 0.5 to 10µm, respectively. When the carbon nanotubes have a diameter and length within these ranges, electrical conductivity and workability may be improved.

Also, the carbon nanotubes can have a large aspect ratio (L/D) because of their large size. When carbon nanotubes having a L/D of 100 to 1000 are used, the electrical conductivity can be improved.

The carbon black may be any conductive carbon black without limitation, and can include graphitized carbon, furnace black, acetylene black, ketjen black, and the like, and combinations thereof.

The conductive carbon black can have an average particle diameter of 20 to 70µm, and an oil absorption regulated by JIS K 5101 of 100 to 600mℓ/100g. When the carbon black has an average particle diameter within the above range, excellent conductivity may be implemented.

When the carbon nanotubes and the carbon black are mixed, the carbon nanotubes may be used in an amount of 0.1 to 3 wt% based on the total amount of the mixture of carbon nanotubes and carbon black. In some embodiments, the carbon nanotubes may be used in an amount of 0.1, 0.2, 0.3, 0.4, 0.5, 0.6, 0.7, 0.8, 0.9, 1, 2, or 3 wt% based on the total amount of the mixture of carbon nanotubes and carbon black. Further, according to some embodiments of the present invention, the amount of carbon nanotubes can be in a range from any of the foregoing amounts to any other of the foregoing amounts. When the carbon nanotubes are included in an amount within the above ranges, suitable electrical percolation for causing conductivity may be realized by adding the small amount, and mechanical strength such as excellent tensile strength, as well as heat resistance, can be maintained.

The conductive additive is included in an amount of 0.1 to 10 parts by weight, for example 0.1 to 10 parts by weight, based on 100 parts by weight of a mixed resin including a polyphenylene-ether-based resin and a polyamide resin. In some embodiments, the conductive additive may be included in an amount of 0.1, 0.2, 0.3, 0.4, 0.5, 0.6, 0.7, 0.8, 0.9, 1, 2, 3, 4, 5, 6, 7, 8, 9 or 10 parts by weight based on 100 parts by weight of a mixed resin of a polyphenylene-ether-based resin and a polyamide resin.

### D Mica

Examples of the mica may include without limitation muscovite, sericite, phlogopite, and the like, and combinations thereof.

The mica may have a particle diameter of 1 to 100µm. When mica having a particle diameter within this range is used, excellent creep resistance may be obtained.

The mica is included in an amount of 30 to 50 parts by weight, based on 100 parts by weight of a mixed resin of a polyphenylene-ether-based resin and a polyamide resin. In some embodiments, the mica may be included in an amount of 30, 31, 32, 33, 34, 35, 36, 37, 38, 39, 40, 41, 42, 43, 44, 45, 46, 47, 48, 49, or 50 parts by weight based on 100 parts by weight of a mixed resin of a polyphenylene-ether-based resin and a polyamide resin. Further, according to some embodiments of the present invention, the amount of mica can be in a range from any of the foregoing amounts to any other of the foregoing amounts. When the mica is included in an amount within these ranges, the polyphenylene-ether-based thermoplastic resin composition may have excellent hardness and impact resistance.

According to one embodiment, the polyphenylene-ether-based thermoplastic resin composition may further include one or more additives. Exemplary additives may include without limitation anti-drip agents, light stabilizers, pigments, dyes, and the like, and combinations thereof, depending on use and purposeof the composition, respectively. The additive may be included in an amount of 0.1 to 30 parts by weight based on 100 parts by weight of a mixed resin of a polyphenylene-ether-based resin and a polyamide resin. In some embodiments, the additive may be included in an amount of 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 parts by weight based on 100 parts by weight of a mixed resin of a polyphenylene-ether-based resin and a polyamide resin. Further, according to some embodiments of the present invention, the amount of additive can be in a range from any of the foregoing amounts to any other of the foregoing amounts. When the additive is included in an amount within these ranges, the effect of the additive according to its purpose may be obtained, and also excellent mechanical properties and improved surface appearance may be obtained.

The polyphenylene-ether-based thermoplastic resin composition mentioned above may be fabricated using commonly known methods. For example, the components mentioned above and selected additives can be mixed, and melt-extruded in an extruder to fabricate a pellet.

In another embodiment, a polyphenylene-ether-based thermoplastic resin composition can be fabricated by obtaining a modified polyphenylene ether resin wherein a reactive monomer is grafted onto a polyphenylene ether resin by mixing a polyphenylene ether resin and a reactive monomer, and mixing the modified polyphenylene ether resin, a polyamide resin, a styrene-based copolymer resin, a conductive additive, and mica.

The reactive monomer may be the same as the reactive monomers mentioned above.

The reactive monomer may be added in an amount of 0.1 to 10 parts by weight, for example 0.1 to 5 parts by weight, based on 100 parts by weight of the modified polyphenylene ether resin and the polyamide resin. In some embodiments, the reactive monomer may be included in an amount of 0.1, 0.2, 0.3, 0.4, 0.5, 0.6, 0.7, 0.8, 0.9, 1, 2, 3, 4, 5, 6, 7, 8, 9, or 10 parts by weight based on 100 parts by weight of a mixed resin of a polyphenylene-ether-based resin and a polyamide resin. Further, according to some embodiments of the present invention, the amount of reactive monomer can be in a range from any of the foregoing amounts to any other of the foregoing amounts. When the reactive monomer is included in an amount within these ranges, the polyphenylene-ether-based thermoplastic resin composition may have improved compatibility and excellent impact resistance.

Considering the high operation temperature, the modified polyphenylene ether resin may be prepared under melt-kneading using a phosphate-based heat stabilizer.

According to still another embodiment, a molded product made using the polyphenylene-ether-based thermoplastic resin composition is provided. The polyphenylene-ether-based thermoplastic resin composition may be used in the manufacture of a molded product requiring impact strength, hardness, conductivity, and creep resistance such as fuel doors for a car, fenders for a car, and the like.

Hereinafter, the embodiments are illustrated in more detail with reference to examples. However, the following are exemplary embodiments and are not limiting.

### Examples

A polyphenylene-ether-based thermoplastic resin composition according to one embodiment includes each component as follows.

### (A) Mixed resin

### (A-1) Polyphenylene-ether-based resin

A polyphenylene ether resin poly(2,6-dimethyl-1,4-phenylene)ether manufactured by GE plastics Ltd. and commercially available as GE plastic HPP-820 and a reactive monomer citric anhydride manufactured by Samchun Pure Chemical Ltd. a are mixed, and the modified polyphenylene ether resin that is obtained by grafting the reactive monomer onto the polyphenylene ether resin is used. The reactive monomer is included in an amount of 1 wt% based on the total amount of the polyphenylene-ether-based resin.

### (A-2) Polyamide resin

Nylon 66 manufactured by Solutia Inc. and commercially available as VYDYNE 50BW is used.

### (B) Styrene-based copolymer resin

A poly(styrene-ethylene-butadiene) triblock copolymer manufactured by Shell Co., Ltd. and commercially available as G1651 is used.

### (C) Conductive additive

(C-1) Multi-walled carbon nanotubes having a diameter of 10 to 50nm and a length of 1 to 25µm manufactured by CNT Co., Ltd. and commercially available as C-tube 100 are used as the carbon nanotubes.
(C-2) Carbon black manufactured by Timcal Ltd. and commercially available as Timrex, KS 5-75TT is used as carbon black.

### D Mica

M-325 manufactured by KOCH Co., Ltd. is used.

### (E) Talc

UPN HS-T 0.5 manufactured by HAYASHI Pure Chemical Ind., Ltd. is used.

### (F) Wollastonite

Nyglos-8 manufactured by NYCO Minerals Inc. is used.

### Examples 1 to 6 and Comparative Examples 1 to 4

Each of the aforementioned components is used according to the composition amount as shown in the following Table 1. The polyphenylene ether resin and reactive monomer are mixed, and remaining components are mixed to prepare a polyphenylene-ether-based resin composition. Then, each composition is melt-kneaded by using a twin screw melt-extruder heated at 280 to 300°C to fabricate a chip. The chip is dried at 130°C for 5 hours or more, and then 10cm width x 10cm height x 0.3cm thickness flat specimens are fabricated using a screw-type injector heated at 280 to 300°C at a molding temperature ranging from 80 to 100°C.

**Table 1**

| | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| (A) Mixed resin | (A-1) polyphenylene-ether-based resin (wt%) | 50 | 50 | 50 | 50 | 50 | 50 | 50 | 50 | 50 | 50 |
| | (A-2) polyamide resin (wt%) | 50 | 50 | 50 | 50 | 50 | 50 | 50 | 50 | 50 | 50 |
| (B) Styrene-based copolymer resin (parts by weight*) | | 5 | 5 | 5 | 5 | 5 | 5 | 5 | 5 | 5 | 5 |
| (C) Conductive additive (parts by weight*) | (C-1) carbon nanotube | 0.2 | 0.3 | 0.3 | - | 0.5 | - | 0.2 | 0.2 | 0.3 | 0.3 |
| | (C-2) carbon black | 2 | 1 | 3 | 2 | - | 10 | 2 | 2 | 3 | 3 |
| (D) Mica (parts by weight*) | | 30 | 30 | 30 | 30 | 30 | 30 | - | 60 | - | - |
| (E) Talc (parts by weight*) | | - | - | - | - | - | - | - | - | 30 | - |
| (F) Wollastonite (parts by weight*) | | - | - | - | - | - | - | - | - | - | 30 |
| * parts by weight: denotes a content unit represented based on 100 parts by weight of the mixed resin A | | | | | | | | | | | |

### [Experimental Example]

The properties of the specimens of Examples 1 to 6 and Comparative Examples 1 to 4 are evaluated in accordance with the following methods. The results are provided in the following Table 2.
(1) Notch Izod Impact strength: 1/8" thick specimen is evaluated according to ASTM D256.
(2) Flexural modulus: 1/4" thick specimen is evaluated regarding flexural modulus by using ASTM D790.
(3) Sheet resistance: The specimen is evaluated by applying 100V voltage and using a 4-probe method.
(4) Creep displacement: 1/4" thick specimen is evaluated regarding displacement at a temperature of at 90°C for 50 hours according to ASTM 2990 flexural creep measuring standard.

**Table 2**

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Impact strength (kgf · cm/cm) | 7.2 | 6.5 | 6.3 | 12.2 | 7.6 | 12.8 | 18.2 | 3.5 | 5.5 | 5.4 |
| Flexural modulus (kgf/cm²) | 36,500 | 41,200 | 42,100 | 36,200 | 36,500 | 43,600 | 22,100 | 50,100 | 35,400 | 34,800 |
| Sheet resistance (Ω/sq.) | 10¹¹ | 10¹¹ | 10¹¹ | 10¹¹ | 10¹¹ | 10¹⁰ | 10¹⁰ | 10¹⁰ | 10¹² | 10¹¹ |
| Creep displacement (mm) | 1.7 | 1.7 | 1.8 | 1.7 | 1.8 | 1.6 | 4.2 | 1.6 | 2.4 | 3.2 |

Referring to the Tables 1 and 2, Examples 1 to 6 according to one embodiment exhibit an excellent balance of properties such as impact strength, hardness, conductivity, and creep resistance compared with Comparative Example 1 without mica, Comparative Example 2 including mica in an amount outside of the range of the invention, and Comparative Examples 3 and 4 including talc or wollastonite instead of mica.

Particularly, Comparative Example 1 without mica shows deteriorated hardness and creep resistance, and Comparative Example 2 using mica in an amount outside of the range of the invention exhibit deteriorated impact strength. Also, Comparative Examples 3 and 4 using talc or wollastonite instead of mica exhibit deteriorated impact strength and creep resistance.

Accordingly, one embodiment of the composition of the invention including a mixed resin of polyphenylene-ether-based resin and polyamide resin mixed with the styrene-based copolymer resin, conductive additive, and mica may have excellent properties such as impact strength, hardness, conductivity, creep resistance, and the like.

Many modifications and other embodiments of the invention will come to mind to one skilled in the art to which this invention pertains having the benefit of the teachings presented in the foregoing descriptions. Although specific terms are employed herein, they are used in a generic and descriptive sense only and not for purposes of limitation, the scope of the invention being defined in the claims.

## Claims

1. A polyphenylene-ether-based thermoplastic resin composition, comprising:
(A) 100 parts by weight of a mixed resin including (A-1) 5 to 95 wt% of a polyphenylene-ether-based resin and (A-2) 5 to 95 wt% of a polyamide resin;
(B) 1 to 30 parts by weight of a styrene-based copolymer resin based on 100 parts by weight of the mixed resin;
(C) 0.1 to 10 parts by weight of a conductive additive based on 100 parts by weight of the mixed resin, the conductive additive comprises carbon nanotubes, carbon black, carbon fiber, metal powder, or a combination thereof; and
(D) 30 to 50 parts by weight of mica based on 100 parts by weight of the mixed resin.

2. The polyphenylene-ether-based thermoplastic resin composition of claim 1, wherein the polyphenylene-ether-based resin comprises a polyphenylene ether resin, a mixture of a polyphenylene ether resin and a vinyl aromatic polymer, or a modified polyphenylene ether resin wherein a reactive monomer is grafted onto a polyphenylene ether resin.

3. The polyphenylene-ether-based thermoplastic resin composition of claim 2, wherein the polyphenylene ether resin comprises poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4-phenylene)ether and poly(2,3,6-trimethyl-1,4-phenylene)ether, a copolymer of poly(2,6-dimethyl-1,4-phenylene)ether and poly(2,3,6-triethyl-1,4-phenylene)ether, or a combination thereof.

4. The polyphenylene-ether-based thermoplastic resin composition of claims 1 to 3, wherein the polyamide resin comprises polycaprolactam (nylon 6), poly(11-aminoundecanoic acid) (nylon 11), polylauryllactam (nylon 12), polyhexamethylene adipamide (nylon 66), polyhexamethylene azelamide (nylon 69), polyhexamethylene sebacamide (nylon 610), polyhexamethylene dodecanodiamide (nylon 612), polyhexamethylene terephthalamide (nylon 6T), polytetramethylene adipamide (nylon 46), a polycaprolactam /polyhexamethylene terephthalamide copolymer (nylon 6/6T), a polyhexamethylene adipamide/polyhexamethylene terephthalamide copolymer (nylon 66/6T), a polyhexamethylene adipamide/polyhexamethylene isophthalamide copolymer (nylon 66/61), a polyhexamethylene terephthalamide/polyhexamethylene isophthalamide copolymer (nylon 6T/6I), a polyhexamethylene terephthalamide/polydodecaneamide copolymer (nylon 6T/12), a polyhexamethylene adipamide/polyhexamethylene terephthalamide/polyhexamethylene isophthalamide copolymer (nylon 66/6T/6I), polyxylene adipamide (nylon MXD6), a polyhexamethylene terephthalamide/poly2-methylpentamethylene terephthalamide copolymer (nylon 6T/M5T), nylon 10T/1012, polynonamethylene terephthalamide (nylon 9T), polydecamethylene terephthalamide (nylon 10T), polyamide 11T (nylon 11T), polyamide 12T (nylon 12T), a copolymer thereof, or a combination thereof.

5. The polyphenylene-ether-based thermoplastic resin composition of claims 1 to 4, wherein the styrene-based copolymer resin comprises an AB-type diblock copolymer, an ABA-type triblock copolymer, a radical block copolymer, or a combination thereof.

6. The polyphenylene-ether-based thermoplastic resin composition of claims 1 to 5, wherein the styrene-based copolymer resin comprises a copolymer of a vinyl aromatic monomer and a diene-rubber.

7. The polyphenylene-ether-based thermoplastic resin composition of claims 1 to 6, wherein the conductive additive comprises a mixture of carbon nanotubes and carbon black.

8. The polyphenylene-ether-based thermoplastic resin composition of claims 1 to 7, wherein the carbon nanotubes have a diameter of 0.5 to 100nm and a length of 0.01 to 100µm.

9. The polyphenylene-ether-based thermoplastic resin composition of claims 1 to 8, wherein the carbon black has an average particle diameter of 20 to 70µm.

10. The polyphenylene-ether-based thermoplastic resin composition of claims 1 to 9, wherein the mica comprises muscovite, sericite, phlogopite, or a combination thereof, and has a particle diameter of 1 to 100µm.

11. A molded product made using the polyphenylene-ether-based thermoplastic resin composition according to any one of claims 1 to 10.

## Patentansprüche

1. Auf Polyphenylenether basierende Thermoplastharzzusammensetzung, umfassend:
(A) 100 Gewichtsteile eines gemischten Harzes, das (A-1) 5 bis 95 Gew.-% eines auf Polyphenylenether basierenden Harzes und (A-2) 5 bis 95 Gew.-% eines Polyamidharzes enthält;
(B) 1 bis 30 Gewichtsteile eines auf Styrol basierenden Copolymerharzes, bezogen auf 100 Gewichtsteile des gemischten Harzes;
(C) 0,1 bis 10 Gewichtsteile eines leitfähigen Additivs, bezogen auf 100 Gewichtsteile des gemischten Harzes, wobei das leitfähige Additiv Kohlenstoffnanoröhren, Ruß, Kohlefaser, Metallpulver oder eine Kombination davon umfasst; und
(D) 30 bis 50 Gewichtsteile Glimmer, bezogen auf 100 Gewichtsteile des gemischten Harzes.

2. Auf Polyphenylenether basierende Thermoplastharzzusammensetzung nach Anspruch 1, wobei das auf Polyphenylenether basierende Harz ein Polyphenylenetherharz, eine Mischung von einem Polyphenylenetherharz und einem vinylaromatischen Polymer oder ein modifiziertes Polyphenylenetherharz, bei dem ein reaktives Monomer auf ein Polyphenylenetherharz aufgepfropft ist, umfasst.

3. Auf Polyphenylenether basierende Thermoplastharzzusammensetzung nach Anspruch 2, wobei das Polyphenylenetherharz Poly(2,6-dimethyl-1,4-phenylen)ether, Poly(2,6-diethyl-1,4-phenylen)-ether, Poly(2,6-dipropyl-1,4-phenylen)ether, Poly(2-methyl-6-ethyl-1,4-phenylen)ether, Poly(2-methyl-6-propyl-1,4-phenylen)ether, Poly(2-ethyl-6-propyl-1,4-phenylen)ether, Poly(2,6-diphenyl-1,4-phenylen)ether, ein Copolymer von Poly(2,6-dimethyl-1,4-phenylen)ether und Poly(2,3,6-trimethyl-1,4-phenylen)ether, ein Copolymer von Poly(2,6-dimethyl-1,4-phenylen)ether und Poly-(2,3,6-triethyl-1,4-phenylen)ether oder eine Kombination davon umfasst.

4. Auf Polyphenylenether basierende Thermoplastharzzusammensetzung nach den Ansprüchen 1 bis 3, wobei das Polyamidharz Polycaprolactam (Nylon 6), Poly(11-aminoundecansäure) (Nylon 11), Polylauryllactam (Nylon 12), Polyhexamethylenadipamid (Nylon 66), Polyhexamethylenazelamid (Nylon 69), Polyhexamethylensebacamid (Nylon 610), Polyhexamethylendodecanodiamid (Nylon 612), Polyhexamethylenterephthalamid (Nylon 6T), Polytetramethylenadipamid (Nylon 46), ein Polycaprolactam/Polyhexamethylenterephthalamid-Copolymer (Nylon 6/6T), ein Polyhexamethylenadipamid/Polyhexamethylenterephthalamid-Copolymer (Nylon 66/6T), ein Polyhexamethylenadipamid/Polyhexamethylenisophthalamid-Copolymer (Nylon 66/61), ein Polyhexamethylenterephthalamid/Polyhexamethylenisophthalamid-Copolymer (Nylon 6T/6I), ein Polyhexamethylenterephthalamid/Polydodecanamid-Copolymer (Nylon 6T/12), ein Polyhexamethylenadipamid/Polyhexamethylenterephthalamid/Polyhexamethylenisophthalamid-Copolymer (Nylon 66/6T/6I), Polyxylenadipamid (Nylon MXD6), ein Polyhexamethylenterephthalamid/Poly2-methylpentamethylen-terephthalamid-Copolymer (Nylon 6T/M5T), Nylon 10T/1012, Polynonamethylenterephthalamid (Nylon 9T), Polydecamethylenterephthalamid (Nylon 10T), Polyamid 11T (Nylon 11T), Polyamid 12T (Nylon 12T), ein Copolymer davon oder eine Kombination davon umfasst.

5. Auf Polyphenylenether basierende Thermoplastharzzusammensetzung nach den Ansprüchen 1 bis 4, wobei das auf Styrol basierende Copolymerharz ein Diblockcopolymer vom AB-Typ, ein Triblockcopolymer vom ABA-Typ, ein Radikalblockcopolymer oder eine Kombination davon umfasst.

6. Auf Polyphenylenether basierende Thermoplastharzzusammensetzung nach den Ansprüchen 1 bis 5, wobei das auf Styrol basierende Copolymerharz ein Copolymer aus einem vinylaromatischen Monomer und einem Dienkautschuk umfasst.

7. Auf Polyphenylenether basierende Thermoplastharzzusammensetzung nach den Ansprüchen 1 bis 6, wobei das leitfähige Additiv eine Mischung von Kohlenstoffnanoröhren und Ruß umfasst.

8. Auf Polyphenylenether basierende Thermoplastharzzusammensetzung nach den Ansprüchen 1 bis 7, wobei die Kohlenstoffnanoröhren einen Durchmesser von 0,5 bis 100 nm und eine Länge von 0,01 bis 100 µm aufweisen.

9. Auf Polyphenylenether basierende Thermoplastharzzusammensetzung nach den Ansprüchen 1 bis 8, wobei der Ruß einen mittleren Teilchendurchmesser von 20 bis 70 µm aufweist.

10. Auf Polyphenylenether basierende Thermoplastharzzusammensetzung nach den Ansprüchen 1 bis 9, wobei der Glimmer Muscovit, Sericit, Phlogopit oder eine Kombination davon umfasst und einen Teilchendurchmesser von 1 bis 100 µm aufweist.

11. Formkörper, hergestellt unter Verwendung der auf Polyphenylenether basierenden Thermoplastharzzusammensetzung nach einem der Ansprüche 1 bis 10.

## Revendications

1. Composition de résine thermoplastique à base de polyphénylène éther, comprenant :
(A) 100 parties en poids d'une résine mélangée contenant (A-1) 5 à 95 % en poids d'une résine à base de polyphénylène éther et (A-2) 5 à 95 % en poids d'une résine de polyamide ;
(B) 1 à 30 parties en poids d'une résine copolymère à base de styrène relativement à 100 parties en poids de la résine mélangée ;
(C) 0,1 à 10 parties en poids d'un additif conducteur relativement à 100 parties en poids de la résine mélangée, l'additif conducteur comprenant des nanotubes de carbone, du noir de carbone, des fibres de carbone, une poudre métallique ou une combinaison de ceux-ci ; et
(D) 30 à 50 parties en poids de mica relativement à 100 parties en poids de la résine mélangée.

2. Composition de résine thermoplastique à base de polyphénylène éther selon la revendication 1, la résine à base de polyphénylène éther comprenant une résine de polyphénylène éther, un mélange d'une résine de polyphénylène éther et d'un polymère aromatique vinylique, ou une résine de polyphénylène éther modifiée dans laquelle un monomère réactif est greffé sur une résine de polyphénylène éther.

3. Composition de résine thermoplastique à base de polyphénylène éther selon la revendication 2, dans laquelle la résine de polyphénylène éther comprend le poly(2,6-diméthyl-1,4-phénylène)éther, le poly(2,6-diéthyl-1,4-phénylène)éther, le poly(2,6-dipropyl-1,4-phénylène)éther, le poly(2-méthyl-6-éthyl-1,4-phénylène)éther, le poly(2-méthyl-6-propyl-1,4-phénylène)éther, le poly(2-éthyl-6-propyl-1,4-phénylène)éther, le poly(2,6-diphényl-1,4-phénylène)éther, un copolymère de poly(2,6-diméthyl-1,4-phénylène)éther et de poly(2,3,6-triméthyl-1,4-phénylène)éther, un copolymère de poly(2,6-diméthyl-1,4-phénylène)éther et de poly(2,3,6-triéthyl-1,4-phénylène)éther, ou une combinaison de ceux-ci.

4. Composition de résine thermoplastique à base de polyphénylène éther selon les revendications 1 à 3, dans laquelle la résine de polyamide comprend le polycaprolactame (nylon 6), le poly(acide 11-aminoundécanoïque) (nylon 11), le polylauryllactame (nylon 12), le polyhexaméthylène adipamide (nylon 66), le polyhexaméthylène azélamide (nylon 69), le polyhexaméthylène sébaçamide (nylon 610), le polyhexaméthylène dodécanodiamide (nylon 612), le polyhexaméthylène téréphtalamide (nylon 6T), le polytétraméthylène adipamide (nylon 46), un copolymère de polycaprolactame/polyhexaméthylène téréphtalamide (nylon 6/6T), un copolymère de polyhexaméthylène adipamide/polyhexaméthylène téréphtalamide (nylon 66/6T), un copolymère de polyhexaméthylène adipamide/polyhexaméthylène isophtalamide (nylon 66/6I), un copolymère de polyhexaméthylène téréphtalamide/polyhexaméthylène isophtalamide (nylon 6T/6I), un copolymère de polyhexaméthylène téréphtalamide/polydodécaneamide (nylon 6T/12), un copolymère de polyhexaméthylène adipamide/polyhexaméthylène téréphtalamide/ polyhexaméthylène isophtalamide (nylon 66/6T/6I), le polyxylène adipamide (nylon MXD6), un copolymère de polyhexaméthylène téréphtalamide/poly-2-méthylpentaméthylène téréphtalamide (nylon 6T/M5T), le nylon 10T/1012, le polynonaméthylène téréphtalamide (nylon 9T), le polydécaméthylène téréphtalamide (nylon 10T), le polyamide 11T (nylon 11T), le polyamide 12T (nylon 12T), un copolymère de ceux-ci, ou une combinaison de ceux-ci.

5. Composition de résine thermoplastique à base de polyphénylène éther selon les revendications 1 à 4, dans laquelle la résine copolymère à base de styrène comprend un copolymère dibloc de type AB, un copolymère tribloc de type ABA, un copolymère à blocs obtenu par polymérisation radicalaire, ou une combinaison de ceux-ci.

6. Composition de résine thermoplastique à base de polyphénylène éther selon les revendications 1 à 5, dans laquelle la résine copolymère à base de styrène comprend un copolymère d'un monomère aromatique vinylique et d'un caoutchouc diène.

7. Composition de résine thermoplastique à base de polyphénylène éther selon les revendications 1 à 6, dans laquelle l'additif conducteur comprend un mélange de nanotubes de carbone et de noir de carbone.

8. Composition de résine thermoplastique à base de polyphénylène éther selon les revendications 1 à 7, dans laquelle les nanotubes de carbone ont un diamètre de 0,5 à 100 nm et une longueur de 0,01 à 100 µm.

9. Composition de résine thermoplastique à base de polyphénylène éther selon les revendications 1 à 8, dans laquelle le noir de carbone a un diamètre de particule moyen de 20 à 70 µm.

10. Composition de résine thermoplastique à base de polyphénylène éther selon les revendications 1 à 11, dans laquelle le mica comprend de la muscovite, de la séricite, de la phlogopite, ou une combinaison de celles-ci, et a un diamètre de particule de 1 à 100 µm.

11. Produit moulé fabriqué en utilisant la composition de résine thermoplastique à base de polyphénylène éther selon l'une quelconque des revendications 1 à 10.
